(19) **Europäisches Patentamt European Patent Office Office européen des brevets**

(11) **EP 1 693 782 B1**

(12) **EUROPEAN PATENT SPECIFICATION**

(45) Date of publication and mention
of the grant of the patent:
**11.02.2009 Bulletin 2009/07**

(51) Int Cl.:
***G06K 9/00*** (2006.01)

(21) Application number: **05250970.0**

(22) Date of filing: **21.02.2005**

(54) **Method for facial features detection**

Verfahren zum Detektieren von Gesichtsmerkmalen

Procédé de détection des caractéristiques du visage

(84) Designated Contracting States:
**DE FR GB**

(43) Date of publication of application:
**23.08.2006 Bulletin 2006/34**

(73) Proprietors:
• **Mitsubishi Electric Information Technology Centre Europe B.V. Guildford, Surrey GU2 7YD (GB)**
Designated Contracting States:
**GB**
• **MITSUBISHI DENKI KABUSHIKI KAISHA Chiyoda-ku Tokyo 100-8310 (JP)**
Designated Contracting States:
**DE FR**

(72) Inventors:
• **Sibiryakov, Alexander Guildford Surrey GU2 9TJ (GB)**
• **Bober, Miroslaw Guildford Surrey GU1 2SE (GB)**

(74) Representative: **Whitlock, Holly Elizabeth Ann et al R G C Jenkins, 26 Caxton Street London SW1H 0RJ (GB)**

(56) References cited:
EP-A- 1 318 475 US-A- 5 629 752
US-A- 5 982 912 US-A1- 2001 033 675
US-A1- 2004 062 424

• BINGLONG XIE ET AL: "Component Fusion for Face Detection in the Presence of Heteroscedastic Noise" PROCEEDINGS ANNUAL CONFERENCE OF THE GERMAN SOCIETY FOR PATTERN RECOGNITION DAGM, 10 September 2003 (2003-09-10), pages 434-441, XP002316745
• KAWATO S ET AL: "Real-time detection of nodding and head-shaking by directly detecting and tracking the between-eyes" AUTOMATIC FACE AND GESTURE RECOGNITION, 2000. PROCEEDINGS. FOURTH IEEE INTERNATIONAL CONFERENCE ON GRENOBLE, FRANCE 28-30 MARCH 2000, LOS ALAMITOS, CA, USA,IEEE COMPUT. SOC, US, 28 March 2000 (2000-03-28), pages 40-45, XP010378321 ISBN: 0-7695-0580-5
• KAWATO S ET AL: "Real-time detection of between-the-eyes with a circle frequency filter" PROCEEDINGS OF THE FIFTH ASIAN CONFERENCE ON COMPUTER VISION ASIAN FEDERATION OF COMPUTER VISION SOC CLAYTON, VIC., AUSTRALIA, vol. 2, 2002, pages 442-447 vol.2, XP009050857 ISBN: 0-9580256-0-6
• CHEN Q ET AL: "FACE DETECTION BY FUZZY PATTERN MATCHING" PROCEEDINGS OF THE FIFTH INTERNATIONAL CONFERENCE ON COMPUTER VISION. CAMBRIDGE, MA., JUNE 20 - 23, 1995, PROCEEDINGS OF THE INTERNATIONAL CONFERENCE ON COMPUTER VISION, LOS ALAMITOS, IEEE COMP. SOC. PRESS, US, vol. CONF. 5, 20 June 1995 (1995-06-20), pages 591-596, XP000557417 ISBN: 0-7803-2925-2

**Description**

The invention relates to a method and apparatus for detecting or locating objects, especially facial features, in an image.

Facial feature detection is a necessary first-step in many computer vision applications in areas such as face recognition systems, content-based image retrieval, video coding, video conferencing, crowd surveillance, and intelligent human-computer interfaces.

Given a typical face detection problem of locating a face in a cluttered scene, low-level analysis first deals with the segmentation of visual features using pixel properties such as gray-scale and color. Because of their low-level nature, features generated from this analysis are usually ambiguous. In feature analysis, visual features are organized into a more global concept of face and facial features using information about face geometry. Through feature analysis, feature ambiguities are reduced and the locations of the face and facial features are determined.

The gray-level information within an image is often used to identify facial features. Features such as eyebrows, pupils, and lips appear generally darker than their surrounding facial regions. This property can be exploited to differentiate various facial parts.

Several recent facial feature extraction algorithms (P.J.L.Van Beek, M.J.T.Reinders, B.Sankur, J.C.A. Van Der Lubbe, "Semantic Segmentation of Videophone Image Sequences", in Proc. of SPIE Int. Conf. on Visual Communications and Image Processing, 1992, pp. 1182-1193; H.P.Graf, E.Cosatto, D.Gibson, E.Petajan, and M.Kocheisen, "Multi-modal System for Locating Heads and Faces", in IEEE Proc. of 2nd Int. Conf. on Automatic Face and Gesture Recognition, Vermont, Oct. 1996, pp. 277-282; and K.M.Lam and H.Yan, "Facial Feature -Location and Extraction for Computerised Human Face Recognition", in Int. Symposium on information Theory and Its Applications, Sydney, Australia, Nov. 1994) search for local gray minima within segmented facial regions. In these algorithms, the input images are first enhanced by contrast-stretching and gray-scale morphological routines to improve the quality of local dark patches and thereby make detection easier. The extraction of dark patches is achieved by low-level grayscale thresholding.

The paper, C.Wong, D. Kortenkamp, and M. Speich, "A Mobile Robot that Recognises People", in IEEE Int. Conf on Tools with Artificial Intelligence, 1995, describes the implementation of a robot that also looks for dark facial regions within face candidates obtained indirectly from color analysis. The algorithm makes use of a weighted human eye template to determine possible locations of an eye pair.

In R.Hoogenboom and M.Lew, "Face Detection Using Local Maxima", in IEEE Proc. of 2nd Int. Conf. on Automatic Face and Gesture Recognition, Vermont, Oct. 1996, pp. 334-339, local maxima, which are defined by a bright pixel surrounded by eight dark neighbors, are used instead to indicate the bright facial spots such as nose tips. The detection points are then aligned with feature templates for correlation measurements.

The work, G.Yang and T.S.Huang, "Human Face Detection in a Complex Background", Pattern Recognition. 27, 1994, 53-63, on the other hand, explores the gray-scale behavior of faces in mosaic (pyramid) images. When the resolution of a face image is reduced gradually either by subsampling or averaging, macroscopic features of the face will disappear. At low resolution, the face region will become uniform. Based on this observation, a hierarchical face detection framework is proposed. Starting at low-resolution images, face candidates are established by a set of rules that search for uniform regions. The face candidates are then verified by the existence of prominent facial features using local minima at higher resolutions. This technique was incorporated into a system for rotation invariant face detection (X.-G.Lv, J.Zhou, and C.-S.Zhang, "A Novel Algorithm for Rotated Human Face Detection", in IEEE Conference on Computer Vision and Pattern Recognition, 2000) and an extension of the algorithm is presented in C.Kotropoulos and I.Pitas, "Rule-based Face Detection in Frontal Views", in Proc. Int. Conf. on Acoustic, Speech and Signal Processing, 1997.

The work, S.Kawato and N.Tetsutani, "Real-time Detection of Between-the-Eyes with a Circle Frequency Filter", ACCV2002: The 5th Asian Conference on Computer Vision, Melbourne, 2002, claims that the point between the eyes is common to most people, and it can be seen for a wide range of face orientations. Moreover, the pattern around this point is fairly stable for any facial expression. The authors propose an algorithm for detection of this feature based on their circle-frequency filter. After detecting the point between eyes the task of nearby facial feature detection is simplified significantly, and this idea is used in our proposal.

U.S. Patent 6,690,814 is concerned with face and facial feature detection from image sequences. The face detection task is simplified by a special arrangement of camera position when a new face image is compared to previously recorded background image. Using image subtraction and thresholding the the face region is located and facial features such as eyes are extracted as dark regions in face region. Special matched filters of different sizes are applied to dark regions. A particular size of filter whose output value is maximum is regarded as the size of the pupil. After filtering, the filter output is smoothed by a Gaussian filter, and the resulting local maxima are pupil candidates. Special arrangement of the camera position restricts possible applications of this method. In our proposal we do not rely on any predefined camera position.

U.S. Patent 6,681,032 describes a face recognition system containing face and eye detection modules. The main difference of this method from the proposed method is that the face detection method is entirely based on extracting skin color distribution and matching it with pre-stored information. The eye detection module is based on matching region of interest with eigeneye templates, constructed from a reference set of images.

U.S. Patent 6,611,613 contains an eye detection method based on the observation that eye regions of the face image commonly contain a strong gray characteristic (small difference between the maximum and minimum values of color components). The extracted regions are then validated by geometrical features (compactness, aspect ratio) and by texture features (presence of strong horizontal edges). The extracted eye pair determines the size, orientation and position of the face region, which is further validated by other facial features (eyebrows, nostrils, mouth).

U.S. Patent 6,381,345 describes an eye detection method suitable for videoconference applications. First the image is blurred using a Gaussian filter, then eyes are extracted as large dark regions, then eyebrows are eliminated using geometrical features. After that the eyes are segmented using brightness thresholding, and their parameters are determined. The main difference between this method and our proposal is that it assumes that the face is always located in the center of the image and only one eye pair is extracted. Also it uses a predetermined set of brightness thresholds, which was found to be difficult to use under different lighting conditions.

The method from U.S. Patent 6,151,403 consists of the following steps, which are different from our method: (a) determining potential skin regions in an image, based on color; (b) determining valley regions inside the skin region, using morphological operations; (c) template matching, using cross-correlation applied in the valley regions.

The method of eye detection described in U.S. Patent 6,130,617 comprises the steps of: binarizing a face image, extracting candidate regions existing in pairs, determining one candidate pair among all pairs as nostrils, setting the remained candidate pairs forming equilateral triangles in relation to the nostrils as eye candidate pairs, and determining a candidate pair forming the smaller equilateral triangle as eyes. This approach is based on detection of nostrils as the primary facial feature. It was found that this feature is stable only under a special arrangement of camera orientation (upward direction of the optical axis). In our proposal the between-eyes region is used as the primary facial feature; this feature is stable for different face and camera orientations.

U.S. Patent 5,870,138 describes a method of using HSV color space for face and facial features detection. Only H and S components are used for face region detection. The mouth is detected from S and V components using a band pass filter within the face region. The V component within the face region is normalized and correlation with an eye template is used to locate the eyes. Region tracking is used to reduce the search area.

U.S. Patent 5,715,325 describes a system for person identification, where eye features are used in the final stage of face detection. First, the image is reduced in resolution and normalized to compensate for lighting change. Then it is compared to a pre-stored background image to produce a binary interest mask. The face region is determined by template matching and if the matching score exceeds a threshold; a further eye location procedure based on a neural network is performed.

U.S. Patents 6,278,491 and 5,990,973 describe red-eye detection and reduction methods. The main purpose of these methods is to automatically find red eyes resulting from using flash in digital photography. While these methods include face and eye detection steps, their main drawback is that they work well only with color and high-resolution digital images. The unique feature, the red pupil, is used for eye detection. Also, these methods are designed for post-processing of single digital photographs and may not be suitable for real-time video processing due to using computationally expensive algorithms (for example, multi-scale and multi-rotational template matching).

The problem addressed by this invention is robust facial feature detection in complex environments, such as low-quality images and cluttered backgrounds.

One problem of the existing methods of eye detection is their complexity and low reliability due to search of consistent region pairs (left eye, right eye) in the image. Even in a simple image many candidate region pairs can be found and this ambiguity should be resolved by higher-level decision rules. In the present specification, the eye detection is based on a feature that is not frequent in an image. This feature is a region triplet containing left eye, between eyes and right eye regions. This region triplet is further validated by the presence of other facial feature regions such as the mouth, so that eye detection becomes much less ambiguous and less time-consuming.

The invention is defined in claim 1.

Further aspects of the invention are set out in the dependent claims. The invention involves processing signals corresponding to images, using a suitable apparatus.

The solution proposed according to an embodiment of the invention involves the following steps:

1. Facial feature template design and simplification. The template represents only the general appearance of a facial feature, as a union of dark and light regions. Each facial feature can have a set of different templates.

2. Low-level image processing stage:

- Image transformation to integral images so that the time required by the subsequent template matching is independent of template size.

- Template matching on a pixel-by-pixel basis, resulting in multiple confidence maps for each facial feature.
- Combination of confidence maps and extraction of facial feature regions with high confidence level.

3. Facial feature analysis and selection stage:

- Region arrangement analysis and extraction of multiple sets of candidates for 'left eye', 'between eyes', 'right eye'.
- Best facial feature candidates selection based on high confidence levels, texture features and presence of other facial feature regions

4. Hierarchical strategy of facial feature detection:

- Application of steps 1,2 to downsampled versions of the image and templates
- Extraction of Region Of Interest (ROI) containing detected facial features
- Application of steps 1,2 to the original versions of the templates and the image inside the ROI to exactly locate the facial features.
- Combining the results from different resolutions. If the method fails in one of the resolutions then the results from other resolutions are used.

Further aspects of the invention include the following:

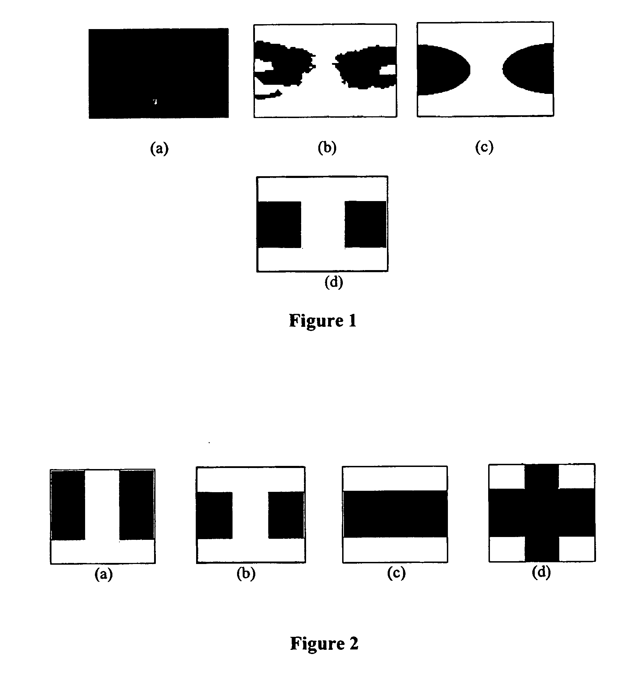

1. Using any number of templates for each facial feature in an unified framework.
2. Using four specific templates ('between eyes region', 'horizontal facial feature' and 'open eye') shown in Figure 2
3. A method for template matching based on statistical data analysis and signal-to-noise ratio computation.
4. Using a stable region triplet <Left Eye, Between Eyes, Right Eye> as the main feature of a face region
5. A method for best facial feature candidate selection based on high confidence levels, texture features and presence of other facial feature regions.

The proposed method has some important and useful properties. Firstly, it describes an approach to facial feature template design and simplification allowing real-time processing. Secondly, a low-cost real-time extension of the template matching method is achieved by using the known integral images technique.

An embodiment of the invention will be described with reference to the accompanying drawings of which:

Fig. 1a shows an image of a facial feature;
Fig. 1b shows a binary version of the image of Fig. 1a;
Figs. 1c and 1d show templates for the facial feature of Fig. 1a;
Figs. 2a to 2d are templates for other facial features;
Fig. 3 is a block diagram illustrating a method of detecting facial features;
Fig. 4 is a block diagram illustrating a facial feature detection algorithm;
Fig. 5 includes an original image and corresponding images showing the results of template matching;
Fig. 6 is an image showing the result of connected region labeling of the thresholded confidence map, composed of multiple template matching results;
Fig. 7 is an image showing the result of triplet feature detection;
Fig. 8 is an image illustrating feature detection;
Fig. 9 is a block diagram illustrating a region analysis and facial feature selection algorithm based on confidence maps, region symmetry and texture measurements.

The general appearance of a facial feature of interest is encoded by simple templates (Figures 1 and 2). The template consists of regions, showing where the distribution of pixel values is darker (black regions) or lighter (white regions). For qualitative estimation of the region shapes a binarization method can be used. Figs. 1a and 1b show an image with a facial feature of interest (between-eyes region) and the corresponding binarization, for qualitative estimation of a template shape. In the example in Figure 1, the feature of interest (between eyes region) looks like two dark elliptical regions (see the template in Fig. 1c derived from the binarized image in Fig. 1b). Due to real-time processing requirements all the regions are preferably rectangular. This leads to further simplification of the template, shown in Figure 1 (d).

Two different templates for the between eyes region are shown in Figure 2(a)(b).

In the following text and block-schemes these templates are referred to as 'Between Eyes Mask 1' and 'Between Eyes Mask 2'. The horizontal facial features template, shown in Figure 2(c), serves to detect closed eyes, mouth, nostrils, and eyebrows. The template in Figure 2(d) is specially designed for open eye detection (dark pupil in light neighbourhood). In the following text and block-schemes the templates from Figures 2 (c)(d) are also referred to as 'Eye Mask 1' and 'Eye Mask 2' respectively.

The templates shown in Figure 2 are simplified templates; they represent only the general appearance of each facial feature, as a union of dark and light regions (rectangles).

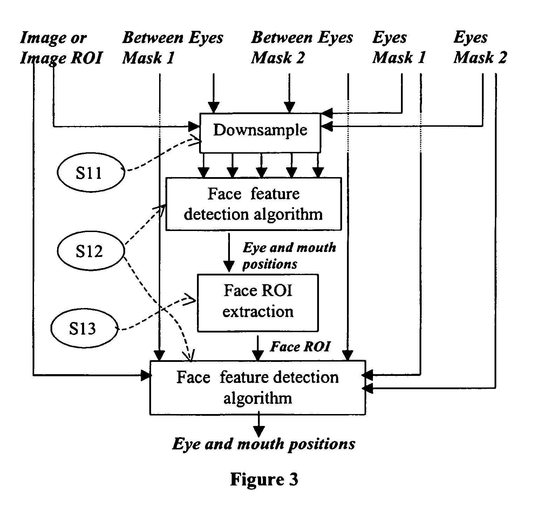

The block-scheme and data flow of the hierarchical method for facial features detection is shown in Figure 3.

First, the original image and all templates are downsampled (S 11). For speed reasons, averaging of four neighbor pixels and image shrinking by a factor of 2 is used, but any other image resizing method can be used. To downsample the templates, the coordinates of their rectangles are divided by 2 and rounded up or down to the nearest integer value.

In the next step S12 the facial feature detection algorithm is applied to downsampled versions of the image and templates. This reduces computational time by a factor of four, but also may reduce the accuracy of facial feature positions. Often eyes can be more easily detected in the downsampled images because confusing details, such as glasses, may not appear at the reduced resolution. The opposite situation is also possible: eyebrows at lower resolution can look like closed eyes and closed eyes can almost disappear; in this case the eyebrows usually become the final result of detection. If a mouth can be detected at the original resolution then it can usually also be detected at lower resolution. This means that even if eyebrows are detected instead of eyes, the face region, containing eyes and mouth, is detected correctly.

Taking into account possible problems with detection results at lower resolution, the detected features are used only for extraction of Region Of Interest (S13).

Finally, the same detection algorithm is applied to original resolution of templates and the image inside the ROI to exactly locate the facial features (S12). Some results from the detection at lower resolution, such as approximate mouth position, can be used in this step. The computational time of this step is proportional to the ROI size, which is usually smaller than the size of the original image.

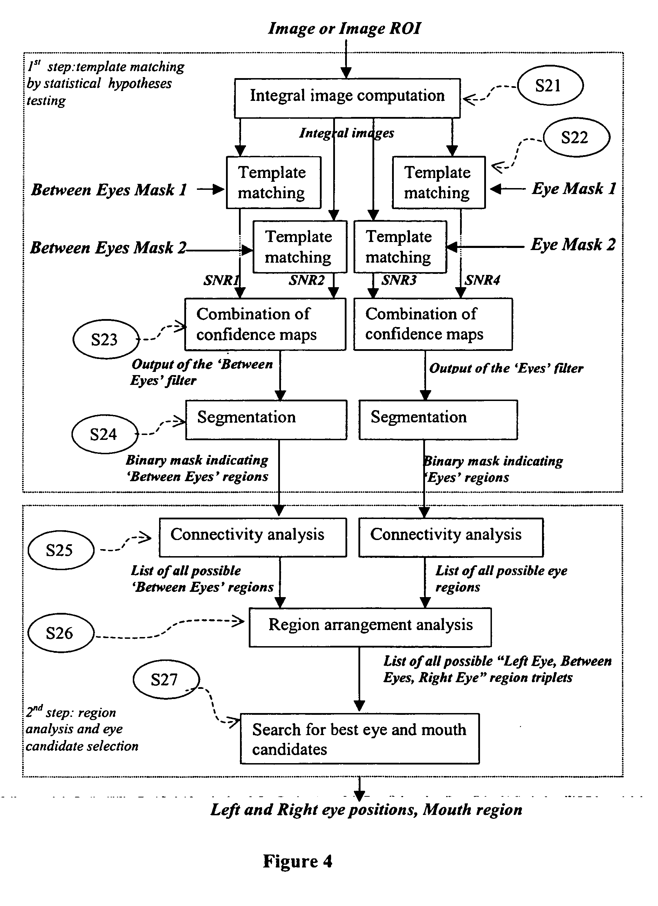

The block-scheme and data flow of the facial feature detection algorithm (denoted by S12 in Figure 3) is shown in Figure 4. There are two main steps in the algorithm; the first one is a low-level image processing, including:

1) Integral image computation (S21). As the templates are represented as a union of rectangles of different sizes, a special image pre-processing is required for fast computation of statistical features (average and dispersion) inside these rectangles. Transformation of the image into the integral representation provides fast computation of such features with only four pixel references, i.e. the corners of the rectangles. Integral image computation is a known prior art technique. Briefly, it involves integral images Sum(x,y) and SumQ(x,y) defined as follows:

$$Sum(x,y) = \sum_{a \leq x}\sum_{b \leq y} I(a,b) = I(x,y) + S(x-1,y) + S(x,y-1) - S(x-1,y-1)$$

$$SumQ(x,y) = \sum_{a \leq x}\sum_{b \leq y} I^2(a,b) = I^2(x,y) + SQ(x-1,y) + SQ(x,y-1) - SQ(x-1,y-1)$$

where I(x,y) is the original image for x,y $\geq$0 and I(x,y) = 0 for x,y < 0.

2) Template matching performed for each template (S22). This procedure is based on statistical hypothesis testing for each pixel neighbourhood. The result of this step is a set of confidence maps. Two maps indicate a likelihood of presence of the 'Between Eyes' region; another two maps indicate possible eye regions. Each pixel of a confidence map contains a result of hypothesis testing and can be considered as a similarity measure between the image region and a template.

3) Combination of confidence maps (S23). Pixel-by-pixel multiplication of confidence maps is used in the current implementation, but other combination methods, such as addition or maximal value selection, are also applicable. The range of pixel-by-pixel multiplication results depends on numerical format of the confidence maps. In the case of fixed-point representation, additional division or bit shift is required.

4) Segmentation of confidence maps (S24). Each confidence map is segmented in order to separate regions with high confidence from the background of low confidence. The similarity measure can be also interpreted as signal-to-noise ratio (SNR), which opens the possibility of thresholding the confidence map. A threshold value of SNR~1.1, indicating that the signal level is just above the noise level, is used in the current implementation. More sophisticated methods of segmentation, such as morphological operations or small/large region elimination are also applicable at this stage.

The second step of the algorithm consists of analysis aiming to detect image regions with a high confidence value. First, all such regions are extracted by a connected component labelling algorithm (S25) applied to thresholded confidence maps. Then all possible region triplets (Left Eye region, Between Eyes region, Right Eye region) are iterated and roughly checked for symmetry (S26). And finally, the triplets with high total confidence level, validated by texture features and the presence of other facial feature regions such as mouth and nostrils, are selected (S27). Local maxima of confidence level are considered as exact eye positions.

Template matching in the preferred embodiment is carried out as follows.

Application of the statistical t-test to two pixel groups from the image, defined by a template (Fig.2) leads to the following similarity measure (some equivalent transformations are skipped):

$$\left(\frac{Signal}{Noise}\right)^2 = \left(\frac{Difference\ between\ group\ means}{Variability\ of\ groups}\right)^2 = \frac{|R|\sigma^2(R)}{|B|\sigma^2(B)+|W|\sigma^2(W)} - 1$$

Removing the constant from the expression above we obtain our similarity measure:

$$SNR = \frac{|R|\sigma^2(R)}{|B|\sigma^2(B)+|W|\sigma^2(W)}$$

where the template R is represented as union of two regions: R=B∪W, where B is a 'black' region; W is a 'white' region; $\sigma^2(Q)$ is the dispersion of the image values in region Q, and |Q| designates the number of pixels inside region Q. Using the integral images the computation of $\sigma^2(Q)$ for any rectangular region Q requires 2*4 pixel references instead of 2*|Q|. Pixel referencing here means single addressing to a 2D image array in a memory in order to obtain a pixel value.

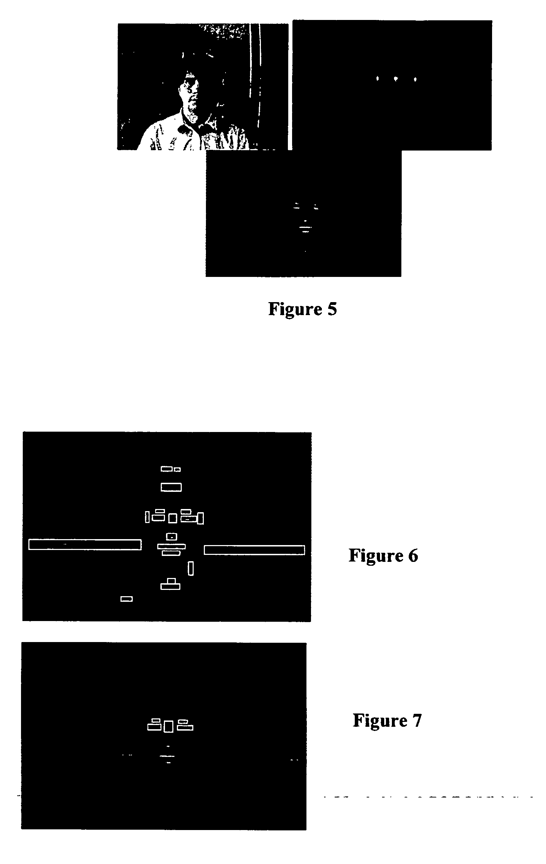

Figure 5 shows results of template matching for 'Between eyes' and 'Eye' templates.

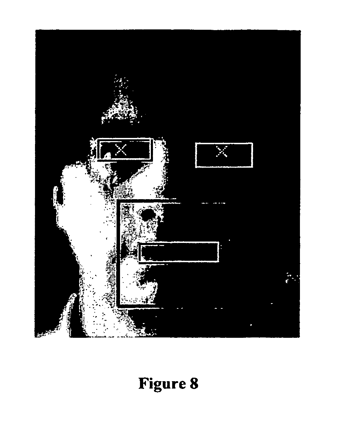

Figure 6 shows a set of regions extracted from the confidence maps, and the result of connected region labelling applied to the result of combining two confidence maps for both 'Between Eyes' and 'Eyes' templates. Each region is shown by its bounding box. Figure 7 shows the result of region arrangement analysis based on symmetry. This result contains candidates for Left Eye, Between Eyes, Right Eye features. We assume that the distance between left and right eyes is approximately equal to the distance between the mouth and the middle of the eyes. Having two eye candidates a rectangular search area of dimension $d \times d$ is determined, where $d$ is the distance between the eye positions. The vertical distance between this region and eyes is chosen to be d/2. A region in the search area, containing the highest confidence map value, is selected as a candidate for the mouth region (Figure 8).

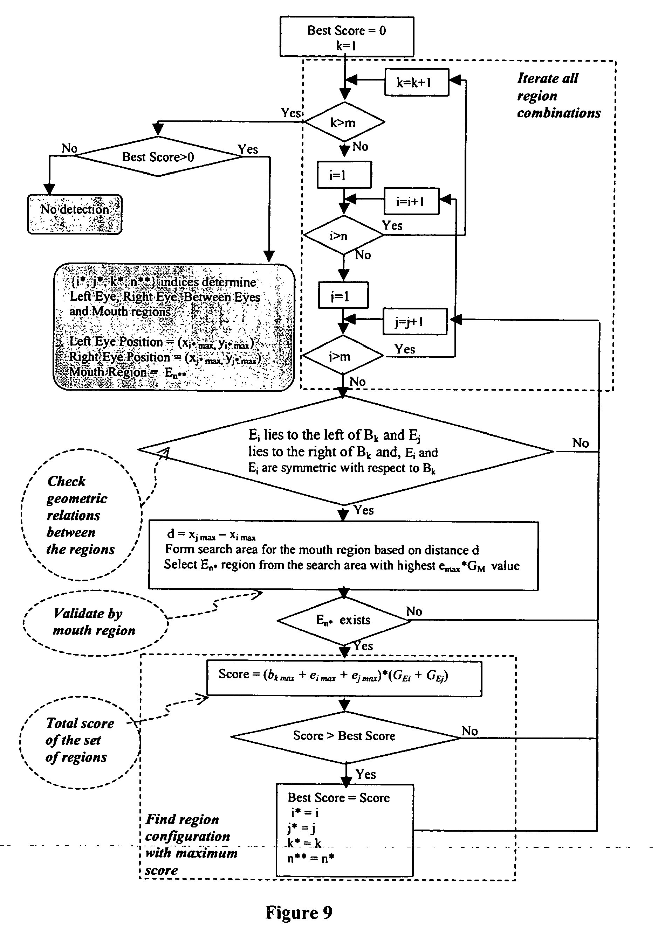

Using the results of template matching and connected region labelling the algorithm selects the best eye candidates based on high confidence map values, region symmetry and high gradient density. To select the correct set of regions corresponding to left eye, between eyes, right eye and mouth the algorithm shown in Figure 9 is used.

The following designations are used in Figure 9:

- b(x,y) is 'between eyes' confidence map;
- B = {B$_1$,...,B$_n$} is a set of connected regions extracted from b(x,y).
- e(x,y) is 'eyes' confidence map;
- E ={E$_1$,...,E$_m$} is a set of connected regions extracted from e(x,y). Note that the E set includes both eyes and mouth candidate regions.
- i,j,k indices specify current left eye, right eye and between eyes regions respectively.
- For each region from the B set the position of the maximum and its value $b_{max}(x_{max},y_{max})$ are pre-computed; $b_{max}$ is used to compute the total score of the set of regions (Fig.9); $(x_{max},y_{max})$ indicates the centre of each possible between-eyes region.
- Each region from the E set has the following pre-computed features:

  ○ $e_{max}(x_{max},y_{max})$ - position of the maximum and its value; $e_{max}$ is used to compute the total score of the set of regions (Fig.9); (xmax,ymax) indicates an eye centre.
  ○ $G_E$, $G_M$ - texture measurements, which are computed inside a region P as follows:

$$G_E = \frac{1}{|P|}\sum_{(x,y)\in P}|I(x+1,y)-I(x,y)|, \quad G_M = \frac{1}{|P|}\sum_{(x,y)\in P}|I(x,y+1)-I(x,y)|$$

Both texture measurements contribute to the total score of the region set (Fig.9).

Some alternatives and developments are discussed below.

Detection of other facial features, such as nose and nostrils, was also considered in order to support detection of the main facial features. This implementation can restrict the range of situations where the method works stably, because appearance of these facial features is more affected by lighting conditions and camera position. But in some specific applications, such as videoconferences, including these features makes the system more robust.

Colour-based skin segmentation can significantly restrict the search area in the image and reduce the number of candidates for facial features. This implementation can also restrict the range of situations where the method can work (greyscale images, poor lighting conditions).

Tracking of face and facial features has been implemented as an option (see Figures 3, 4 where instead of the image an arbitrary image ROI can be used)). This mode significantly reduces computational time, but it is not suitable for processing single images.

In this specification, the term "image" is used to describe an image unit, including after processing such as to change resolution, upsampling or downsampling or in connection with an integral image, and the term also applies to other similar terminology such as frame, field, picture, or sub-units or regions of an image, frame etc. The terms pixels and blocks or groups of pixels may be used interchangeably where appropriate. In the specification, the term image means a whole image or a region of an image, except where apparent from the context. Similarly, a region of an image can mean the whole image. An image includes a frame or a field, and relates to a still image or an image in a sequence of images such as a film or video, or in a related group of images.

The image may be a grayscale or colour image, or another type of multi-spectral image, for example, IR, UV or other electromagnetic image, or an acoustic image etc.

The invention can be implemented for example in a computer system, with suitable software and/or hardware modifications. For example, the invention can be implemented using a computer or similar having control or processing means such as a processor or control device, data storage means, including image storage means, such as memory, magnetic storage, CD, DVD etc, data output means such as a display or monitor or printer, data input means such as a keyboard, and image input means such as a scanner, or any combination of such components together with additional components. Aspects of the invention can be provided in software and/or hardware form, or in an application-specific apparatus or application-specific modules can be provided, such as chips. Components of a system in an apparatus according to an embodiment of the invention may be provided remotely from other components, for example, over the internet.

This application is related to our co-pending application entitled "Fast Method Of Object Detection By Statistical Template Matching" filed on the same date.Further details of certain aspects of the embodiment described herein, such as statistical template matching and derivation and use of the integral image, can be found in the above co-pending application.

**Claims**

1. A method of detecting an object in an image, the object comprising a group of facial features, each of which can be identified in the image using a template that defines a simplified appearance thereof, the method comprising:

   using at least first and second templates for respective first and second different features, preferably eye and between eyes features, of the object;
   performing template matching using said first and second templates to identify features matching the first and second templates, and
   processing the results of the template matching for each of the first and second templates to detect at least one region having a triplet of features, two features matching the first template and one feature matching the second template.

2. The method of claim 1 wherein template matching using said first template is performed concurrently with template matching using said second template.

3. The method of claim 1 or claim 2 wherein the object comprises a group of facial features including the eyes, the first feature is an eye and the second feature is between eyes.

4. The method of claim 3 wherein said first template is for the features of left eye and right eye and the second template is for the feature between eyes.

**5.** The method of any of claims 3 or 4 comprising using a first template for the between eyes feature comprising one or more of the templates shown in Figures 1(c), 1(d), 2(a) and 2(b) and using a second template for the eyes feature comprising one of Figures 2(c) and 2(d).

**6.** The method of any of claims 3 to 5 further comprising validating said detected at least one region having a triplet of features comprising left eye, right eye and between eyes by the presence of a mouth region.

**7.** The method of any of claims 3 to 6 comprising using templates for both a closed eye and an open eye.

**8.** The method of any preceding claim comprising:

initially downsampling an original image, and
after the step of detecting at least one region in the image possibly containing the object of interest, performing template matching of the original image for said detected regions.

**9.** The method of claim 8 comprising combining results of the template matching for different image resolutions.

**10.** The method of any preceding claim comprising performing template matching at a plurality of image resolutions, and deriving a plurality of confidence maps for different resolutions.

**11.** The method of any preceding claim wherein the step of performing template matching using said first and second templates comprises deriving a plurality of confidence maps for the image, each confidence map representing a measure of matching between the image and one of the first and second templates across regions of the image.

**12.** The method of claim 11, wherein the step of processing the results of the template matching for each of the first and second templates comprises combining the confidence maps.

**13.** The method of claim 12 wherein combining involves pixel by pixel multiplication, addition, maximal value selection or the like, optionally followed by thresholding and morphological post-processing.

**14.** The method of any preceding claim comprising performing connectivity analysis, for example on the binary image resulting from the method of claim 13.

**15.** The method of any preceding claim comprising performing region arrangement analysis.

**16.** The method of claim 15 wherein region arrangement analysis involves symmetry checking.

**17.** The method of any preceding claim wherein the step of processing the results of the template matching for each of the first and second templates comprises combining results of template matching with one or more of texture information and information about other objects in the image.

**18.** A method of selecting a facial region candidate in an image using the method of claim 1, comprising considering a region triplet of left eye, right eye and between eyes, and validating the region triplet using a mouth region.

**19.** Apparatus adapted to execute the method of any preceding claim.

**20.** A control device programmed to execute the method of any of claims 1 to 18.

**21.** Apparatus comprising the control device of claim 20, and storage means for storing images.

**22.** A computer-readable storage medium including instructions for executing a method of any of claims 1 to 18.


**Patentansprüche**

**1.** Verfahren zum Detektieren eines Objekts in einem Bild, wobei das Objekt eine Gruppe von Gesichtsmerkmalen umfasst, von denen jedes in dem Bild anhand eines Musters, das ein vereinfachtes Erscheinungsbild davon definiert, identifiziert werden kann, wobei das Verfahren umfasst:

Verwenden von mindestens einem ersten und einem zweiten Muster für entsprechende unterschiedliche erste und zweite Merkmale, vorzugsweise Augenmerkmale und Merkmale zwischen den Augen, des Objekts; Durchführen eines Mustervergleichs anhand des ersten und des zweiten Musters, um Merkmale zu identifizieren, die mit dem ersten und dem zweiten Muster übereinstimmen; und

Verarbeiten der Ergebnisse des Mustervergleichs für jedes aus der Gruppe umfassend das erste und das zweite Muster, um mindestens einen Bereich mit einem Merkmalstriplett zu detektieren, wobei zwei Merkmale mit dem ersten Muster übereinstimmen und ein Merkmal mit dem zweiten Muster übereinstimmt.

2. Verfahren nach Anspruch 1, wobei der Mustervergleich anhand des ersten Musters zugleich mit dem Mustervergleich anhand des zweiten Musters durchgeführt wird.

3. Verfahren nach Anspruch 1 oder Anspruch 2, wobei das Objekt eine Gruppe von die Augen einbindenden Gesichtsmerkmalen umfasst, wobei das erste Merkmal ein Auge ist und das zweite Merkmal zwischen den Augen ist.

4. Verfahren nach Anspruch 3, wobei das erste Muster für die Merkmale des linken Auges und des rechten Auges und das zweite Muster für das Merkmal zwischen den Augen bestimmt ist.

5. Verfahren nach einem der Ansprüche 3 oder 4, umfassend das Verwenden eines ersten Musters für das Merkmal zwischen den Augen, umfassend eine oder mehrere der in Figur 1(c), 1(d), 2(a) und 2(b) gezeigten Muster, und das Verwenden eines zweiten Musters für das Augenmerkmal, umfassend eines aus Figur 2(c) und 2(d).

6. Verfahren nach einem der Ansprüche 3 bis 5, ferner umfassend das Validieren des detektierten mindestens einen Bereichs mit einem Triplett von Merkmalen, umfassend das linke Auge, das rechte Auge und den Bereich zwischen den Augen, durch das Vorhandensein eines Mundbereichs.

7. Verfahren nach einem der Ansprüche 3 bis 6, umfassend das Verwenden von Mustern für ein geschlossenes Auge und auch für ein offenes Auge.

8. Verfahren nach einem der vorhergehenden Ansprüche, umfassend:

zunächst Downsampling eines Originalbildes; und
nach dem Schritt des Detektierens mindestens eines Bereichs in dem Bild, der möglicherweise das relevante Objekt enthält, Durchführen eines Mustervergleichs mit dem Originalbild hinsichtlich der detektierten Bereiche.

9. Verfahren nach Anspruch 8, umfassend das Kombinieren von Ergebnissen des Mustervergleichs für verschiedene Bildauflösungen.

10. Verfahren nach einem der vorhergehenden Ansprüche, umfassend das Durchführen eines Mustervergleichs mit einer Mehrzahl von Bildauflösungen und das Ableiten einer Mehrzahl von Konfidenzkarten für unterschiedliche Auflösungen.

11. Verfahren nach einem der vorhergehenden Ansprüche, wobei der Schritt des Durchführens eines Mustervergleichs anhand des ersten und des zweiten Musters das Ableiten einer Mehrzahl von Konfidenzkarten für das Bild umfasst, wobei jede Konfidenzkarte ein Maß für die Übereinstimmung zwischen dem Bild und eines aus der Gruppe umfassend das erste und das zweite Muster über Bereiche des Bildes ist.

12. Verfahren nach Anspruch 11, wobei der Schritt des Verarbeitens der Ergebnisse des Mustervergleichs für jedes aus der Gruppe umfassend das erste und das zweite Muster das Kombinieren der Konfidenzkarten umfasst.

13. Verfahren nach Anspruch 12, wobei das Kombinieren die pixelweise Multiplikation, Addition, Maximalwertauswahl oder dergleichen einbindet, wahlweise gefolgt von Schwellwertbildung und morphologischer Nachbearbeitung.

14. Verfahren nach einem der vorhergehenden Ansprüche, umfassend das Durchführen einer Konnektivitätsanalyse, beispielsweise hinsichtlich des binären Bildes, das sich aus dem Verfahren nach Anspruch 13 ergibt.

15. Verfahren nach einem der vorhergehenden Ansprüche, umfassend das Durchführen einer Bereichsanordnungsanalyse.

**EP 1 693 782 B1**

**16.** Verfahren nach Anspruch 15, wobei die Bereichsanordnungsanalyse eine Symmetrieüberprüfung umfasst.

**17.** Verfahren nach einem der vorhergehenden Ansprüche, wobei der Schritt des Verarbeitens der Ergebnisse des Mustervergleichs für jedes aus der Gruppe umfassend das erste und das zweite Muster das Kombinieren von Ergebnissen des Mustervergleichs mit einer oder mehreren aus der Gruppe umfassend Texturinformationen und Informationen über andere Objekte in dem Bild umfasst.

**18.** Verfahren zum Auswählen eines Gesichtsbereichskandidaten in einem Bild anhand des Verfahrens nach Anspruch 1, umfassend das Berücksichtigen eines Bereichstripletts des linken Auges, des rechten Auges und des Bereichs zwischen den Augen und das Validieren des Bereichstripletts mittels eines Mundbereichs.

**19.** Vorrichtung, die ausgebildet ist, um das Verfahren nach einem der vorhergehenden Ansprüche auszuführen.

**20.** Steuervorrichtung, die programmiert ist, um das Verfahren nach einem der Ansprüche 1 bis 18 auszuführen.

**21.** Vorrichtung, umfassend die Steuervorrichtung nach Anspruch 20 und Speichermittel zum Speichern von Bildern.

**22.** Rechnerlesbares Speichermedium, umfassend Anweisungen zum Ausführen eines Verfahrens nach einem der Ansprüche 1 bis 18.

**Revendications**

**1.** Procédé de détection d'un objet dans une image, lequel objet comprend un groupe de caractéristiques faciales dont chacune peut être identifiée dans l'image en utilisant un modèle qui en définit une apparence simplifiée, lequel procédé consiste à :

- utiliser au moins un premier et un second modèles pour des première et seconde caractéristiques respectives différentes, de préférence des caractéristiques d'oeil et d'espace entre les yeux, de l'objet ;
- effectuer une mise en correspondance de modèles en utilisant lesdits premier et second modèles afin d'identifier des caractéristiques correspondant aux premier et second modèles ; et
- traiter les résultats de la mise en correspondance de modèles pour chacun des premier et second modèles afin de détecter au moins une région comportant un triplet de caractéristiques, deux caractéristiques correspondant au premier modèle et une caractéristique correspondant au second modèle.

**2.** Procédé selon la revendication 1, dans lequel la mise en correspondance de modèles à l'aide dudit premier modèle se fait de manière concurrente à la mise en correspondance de modèle à l'aide du second modèle.

**3.** Procédé selon la revendication 1 ou la revendication 2, dans lequel l'objet comprend un groupe de caractéristiques faciales comprenant les yeux, la première caractéristique étant un oeil et la seconde caractéristique l'espace entre les yeux.

**4.** Procédé selon la revendication 3, dans lequel le premier modèle est destiné aux caractéristiques de l'oeil gauche et de l'oeil droit tandis que le second modèle est destiné à la caractéristique d'espace entre les yeux.

**5.** Procédé selon les revendication 3 ou 4, consistant à utiliser un premier modèle pour la caractéristique d'espace entre les yeux comprenant un ou plusieurs modèles représentés dans les figures 1(c), 1(d), 2(a) et 2(b), et à utiliser un second modèle pour la caractéristique des yeux comprenant l'une des figures 2(c) et 2(d).

**6.** Procédé selon l'une quelconque des revendications 3 à 5, consistant en outre à valider ladite au moins une région détectée et comportant un triplet de caractéristiques, comprenant l'oeil gauche, l'oeil droit et l'espace entre les yeux, par la présence d'une région bouche.

**7.** Procédé selon l'une quelconque des revendications 3 à 6, consistant à utiliser des modèles pour un oeil fermé et un oeil ouvert.

**8.** Procédé selon l'une quelconque des revendications précédentes, consistant à :

- initialement échantillonner de façon réduite une image originale ; et
- après l'étape de détection d'au moins une région dans l'image pouvant contenir l'objet présentant un intérêt, effectuer une mise en correspondance de modèles de l'image originale pour lesdites régions détectées.

9. Procédé selon la revendication 8, consistant à combiner les résultats de la mise en correspondance de modèles pour différentes résolutions d'image.

10. Procédé selon l'une quelconque des revendications précédentes, consistant à effectuer une mise en correspondance de modèles à plusieurs résolutions d'image, et à dériver plusieurs cartes de confiance pour différentes résolutions.

11. Procédé selon l'une quelconque des revendications précédentes, dans lequel l'étape consistant à effectuer une mise en correspondance de modèles à l'aide desdits premier et second modèles consiste à dériver plusieurs cartes de confiance pour l'image, chaque carte de confiance représentant une mesure de la mise en correspondance entre l'image et l'un des premier et second modèles sur des régions de l'image.

12. Procédé selon la revendication 11, dans lequel l'étape consistant à traiter les résultats de la mise en correspondance de modèles pour chacun des premier et second modèles consiste à combiner les cartes de confiance.

13. Procédé selon la revendication 12, dans lequel la combinaison comprend une multiplication, une addition, une sélection de valeur maximale pixel par pixel ou analogue, éventuellement suivie par un établissement de seuil et un post-traitement morphologique.

14. Procédé selon l'une quelconque des revendications précédentes, consistant en outre à effectuer une analyse de connectivité, par exemple sur l'image binaire résultant du procédé de la revendication 13.

15. Procédé selon l'une quelconque des revendications précédentes, consistant à effectuer une analyse de disposition de régions.

16. Procédé selon la revendication 15, dans lequel l'analyse de disposition de région comprend une vérification de symétrie.

17. Procédé selon l'une quelconque des revendications précédentes, dans lequel l'étape de traitement des résultats de la mise en correspondance de modèles pour chacun des premier et second modèles consiste à combiner les résultats de la mise en correspondance de modèles avec une ou plusieurs informations de texture et informations concernant d'autres objets dans l'image.

18. Procédé de sélection d'une région faciale candidate dans une image en utilisant le procédé de la revendication 1, lequel consiste à prendre en compte un triplet de région de l'oeil gauche, de l'oeil droit et de l'espace entre les yeux, et à valider le triplet de régions en utilisant une région bouche.

19. Appareil conçu pour exécuter le procédé selon l'une quelconque des revendications précédentes.

20. Dispositif de commande programmé pour exécuter le procédé selon l'une quelconque des revendications 1 à 18.

21. Appareil comprenant le dispositif de commande selon la revendication 20, et un moyen de stockage pour stocker des images.

22. Support de stockage lisible par ordinateur, comprenant des instructions pour exécuter un procédé selon l'une quelconque des revendications 1 à 18.

(a)  (b)  (c)

(d)

**Figure 1**

(a)  (b)  (c)  (d)

**Figure 2**

*Image or*    *Between Eyes*    *Between Eyes*    *Eyes*    *Eyes*
*Image ROI*    *Mask 1*      *Mask 2*      *Mask 1*    *Mask 2*

Downsample

S11

Face feature
detection algorithm

*Eye and mouth
positions*

Face ROI
extraction

*Face ROI*

S12

S13

Face feature detection
algorithm

*Eye and mouth positions*

**Figure 3**

*Image or Image ROI*

*1st step:template matching by statistical hypotheses testing*

Integral image computation ⟵--- S21

*Integral images*

*Between Eyes Mask 1* ⟶ Template matching

Template matching ⟵--- S22

Template matching ⟵ *Eye Mask 1*

*Between Eyes Mask 2* ⟶ Template matching

Template matching ⟵ *Eye Mask 2*

*SNR1*　*SNR2*　　*SNR3*　*SNR4*

S23 --⟶ Combination of confidence maps

Combination of confidence maps

*Output of the 'Between Eyes' filter*

*Output of the 'Eyes' filter*

S24 --⟶ Segmentation

Segmentation

*Binary mask indicating 'Between Eyes' regions*

*Binary mask indicating 'Eyes' regions*

S25 --⟶ Connectivity analysis

Connectivity analysis

*List of all possible 'Between Eyes' regions*

*List of all possible eye regions*

S26 ---⟶ Region arrangement analysis

*List of all possible "Left Eye, Between Eyes, Right Eye" region triplets*

S27 --⟶

*2nd step: region analysis and eye candidate selection*

Search for best eye and mouth candidates

*Left and Right eye positions, Mouth region*

**Figure 4**

**Figure 5**

**Figure 6**

**Figure 7**

**Figure 8**

Best Score = 0
k=1

k=k+1

*Iterate all region combinations*

Yes — k>m

No — Best Score>0 — Yes

No detection

{i*, j*, k*, n**} indices determine Left Eye, Right Eye, Between Eyes and Mouth regions

Left Eye Position = $(x_{i^* \, max}, y_{i^* \, max})$
Right Eye Position = $(x_{j^* \, max}, y_{j^* \, max})$
Mouth Region = $E_{n^{**}}$

No

i=1

i=i+1

i>n — Yes

No

j=1

j=j+1

i>m — Yes

No

$E_i$ lies to the left of $B_k$ and $E_j$ lies to the right of $B_k$ and, $E_i$ and $E_j$ are symmetric with respect to $B_k$ — No

*Check geometric relations between the regions*

Yes

$d = x_{j \, max} - x_{i \, max}$
Form search area for the mouth region based on distance d
Select $E_{n^*}$ region from the search area with highest $e_{max} * G_M$ value

*Validate by mouth region*

$E_{n^*}$ exists — No

Yes

*Total score of the set of regions*

Score = $(b_{k \, max} + e_{i \, max} + e_{j \, max}) * (G_{Ei} + G_{Ej})$

Score > Best Score — No

Yes

*Find region configuration with maximum score*

Best Score = Score
i* = i
j* = j
k* = k
n** = n*

**Figure 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6690814 B
- US 6681032 B
- US 6611613 B
- US 6381345 B
- US 6151403 A

- US 6130617 A
- US 5870138 A
- US 5715325 A
- US 6278491 B
- US 5990973 A

### Non-patent literature cited in the description

- **P.J.L.VAN BEEK ; M.J.T.REINDERS ; B.SANKUR ; J.C.A. VAN DER LUBBE.** Semantic Segmentation of Videophone Image Sequences. *Proc. of SPIE Int. Conf. on Visual Communications and Image Processing,* 1992, 1182-1193
- **H.P.GRAF ; E.COSATTO ; D.GIBSON ; E.PETAJAN ; M.KOCHEISEN.** Multi-modal System for Locating Heads and Faces. *IEEE Proc. of 2nd Int. Conf. on Automatic Face and Gesture Recognition,* October 1996, 277-282
- **K.M.LAM ; H.YAN.** Facial Feature -Location and Extraction for Computerised Human Face Recognition. *Int. Symposium on information Theory and Its Applications,* November 1994
- **C.WONG ; D. KORTENKAMP ; M. SPEICH.** A Mobile Robot that Recognises People. *IEEE Int. Conf on Tools with Artificial Intelligence,* 1995

- **R.HOOGENBOOM ; M.LEW.** Face Detection Using Local Maxima. *IEEE Proc. of 2nd Int. Conf. on Automatic Face and Gesture Recognition, Vermont,* October 1996, 334-339
- **G.YANG ; T.S.HUANG.** Human Face Detection in a Complex Background. *Pattern Recognition,* 1994, vol. 27, 53-63
- **X.-G.LV ; J.ZHOU ; C.-S.ZHANG.** A Novel Algorithm for Rotated Human Face Detection. *IEEE Conference on Computer Vision and Pattern Recognition,* 2000
- **C.KOTROPOULOS ; I.PITAS.** Rule-based Face Detection in Frontal Views. *Proc. Int. Conf. on Acoustic, Speech and Signal Processing,* 1997
- **S.KAWATO ; N.TETSUTANI.** Real-time Detection of Between-the-Eyes with a Circle Frequency Filter. *ACCV2002: The 5th Asian Conference on Computer Vision,* 2002